# EUROPEAN PATENT APPLICATION

(11) **EP 4 744 471 A1**
(43) Date of publication of application: **20.05.2026**
(21) Application number: 25212101.7
(22) Date of filing: 29.10.2025
(51) Int. Cl.: A01C 5/06

(54) **CLOSING WHEEL SYSTEM**

(30) Priority: 18.11.2024 US 202463722056 P; 13.06.2025 US 202519238319
(71) Applicant: Deere & Company, Moline, IL 61265 (US)
(72) Inventor: Bassett, Joseph D., Mannheim (DE)
(74) Representative: Reichert, Christian

(57) **Abstract**

A closing wheel system (100) is disclosed. The closing wheel system (100) comprising: a first linkage arm (105a) and a second linkage arm (105b); and a first closing wheel (109a) attached to a first closing wheel arm (107a); and wherein the first linkage arm (105a) and the second linkage arm (105b) cooperate to create a castering effect about a virtual pivot point that is a distance away from the first and second linkage arms (105a, 105b), and wherein a turning radius of the closing wheel (109a) caused by the castering effect is at least as long as a turning radius of a towing frame to which the closing wheel system (100) is coupled.

## Description

### FIELD OF INVENTION

The present disclosure relates generally to agricultural planting equipment, and more particularly, to a furrow closing system and apparatus that improves furrow closing performance and equipment utilization.

### BACKGROUND

Agricultural planting equipment is designed to form a furrow in the ground, deposit seed in the furrow, and then cover the seed with soil. One mechanism for covering the seed with soil is generally referred to as a furrow closing system.

A furrow closing system is generally intended to be pulled directly behind and in alignment with the planting equipment used to deposit the seed into the soil, which is itself intended to be pulled behind and in alignment with the planting equipment used to form the furrow. In this manner, the seed may be deposited directly into furrow, and the closing system may properly and fully close the furrow into which the seed has been deposited.

In conventional arrangements, however, maintaining a proper alignment between the furrow closing system, the seed-depositing equipment, the furrow-forming equipment and/or the towing equipment that is pulling the closing system (as well as the other equipment/tools mentioned above) becomes particularly challenging, particularly when maneuvering around curves and/or operating on irregular terrain, such as slopes or irregular surfaces. When maneuvering around curves, even gentle ones, for example, conventional arrangements cause furrow closing systems to turn at a smaller turning radius than that of the furrow opening equipment. As a result, the path along which the conventional closing system is pulled does not align with the path of the opened furrow it is intended to close. As will be appreciated, such misalignment not only leads to suboptimal furrow closure performance, but it also leads to inefficient equipment operation, soil compaction and increased stress on the components of the overall system.

Additionally, when the towing equipment pulls the furrow closing system across surfaces with varying topographies, conventional arrangements result in unequal forces being applied to different parts of the furrow closing system, most notably, the system's closing wheels, which move dirt over the furrow to close it. This unequal force distribution also leads to suboptimal furrow closure performance, as well as to uneven and undue wear on components of the closing wheel system, resulting in mechanical failure and increased maintenance requirements.

The foregoing (and other) problems exist, at least in part, because conventional arrangements lack any mechanism for ensuring that furrow closing systems remain aligned with furrow opening equipment, particularly when maneuvering about curves or on sloped or uneven terrain. Conventional furrow closing systems also lack means for applying and maintaining an equal force to components of furrow closing systems, most notably, the closing wheels. Further still, conventional arrangements lack means for automatically self-correcting furrow closing systems that have become misaligned for any reason.

Accordingly, there is a need for an improved agricultural planting system for closing open furrows that maintains proper and consistent alignment with the towing equipment, furrow opening equipment, and/or seeding equipment, especially during complex maneuvers around curves and/or on slopes, while also ensuring that equal force is distributed across the system's components, including furrow closing wheels, regardless of the topography of the terrain.

### SUMMARY

In accordance with an embodiment, a closing wheel system is provided. The closing wheel system can include a first linkage arm and a second linkage arm, a first closing wheel attached to a first closing wheel arm, wherein the first linkage arm and the second linkage create a castering effect about a virtual pivot point that is a distance away from the first and second linkage arms, and a turning radius of the closing wheel is caused by the castering effect that is at least as long as a turning radius of a towing frame the closing wheel system is coupled to.

The closing wheel system can also include a second closing wheel attached to a second closing wheel arm and an equalizer bar configured to control the vertical movement of the first and second closing wheels by applying an adjustable downward force equally to each of the first closing wheel arm and the second closing wheel arm.

A rocker arm can engage a rocker pin that extends rearwardly towards the first and second closing wheels from a center portion of the rocker arm. The equalizer bar can be pivotally coupled at its center to the rocker pin and coupled at a first end to the first closing wheel arm and a second end to the second closing wheel arm. The rocker arm can be configured to move downwardly to cause the equalizer bar to rotate around the rocker arm and apply the controllable downward force equally to each of the first closing wheel arm and the second closing wheel arm.

The rocker arm can be configured to move downwardly due to the downward force of a mechanical spring, a pneumatic device, an electrical cylinder, an electrical mechanical spring, a gas spring, a hydraulic actuator, a pneumatic actuator, a pneumatic cylinder, an electrical actuator, a hydraulic cylinder assembly, or another device that provides a downward force.

The rocker arm can be configured to move downwardly due to the downward force of the hydraulic cylinder assembly, the hydraulic cylinder assembly including a piston that exerts force onto a ball bearing that, in turn, is configured to move the rocker arm downwardly.

A mounting bracket can be configured to mount the closing wheel system to the towing frame, and a rear pivot mount holds a retaining shaft. The first and second linkage arms can be pivotally coupled to the mounting bracket by a respective front linkage pivot pin and pivotally coupled to the rear pivot mount by a respective rear linkage pivot pin. The distance of the virtual pivot point relative to the first and second linkage arms can be adjustable by adjusting a ratio of a distance between the respective front linkage pivot pins ("distance A") and a distance between the respective rear linkage pivot pins ("distance B").

The turning radius of the first and second closing wheels can be adjusted by adjusting either one of the lengths of the first or second closing wheel arms and the ratio of distance A to distance B. Distance A can be less than distance B. Distance A can be greater than distance B. Distance A can be equal to distance B. Overall, the ratio of distance A to distance B can be equal, greater than, or less than one another.

The first closing wheel arm, the second closing wheel arm, and the rocker arm can be each pivotally coupled to the retaining shaft and configured to pivot vertically about an axis of the retaining shaft.

The closing wheel system can combine or be combined with a firming wheel assembly pivotally coupled to a retaining shaft and positioned to press seed and/or other product into an open furrow. The closing wheel system can further include or can be in combination with a dispensing device supported by a mounting bracket, and the dispensing device can be configured and positioned to deposit the seed, fertilizer, or a combination of both into the open furrow.

The closing wheel system can also be in combination with the firming wheel assembly further comprising a torsion spring coiled around the rear pivot mount and configured to urge the firming wheel assembly downwardly while also resisting upward movement of the firming wheel assembly.

The closing wheel system's virtual pivot point can be located between the tractor and a distal end of the first or second linkage arms, the distal end facing the tractor.

The closing wheel system's virtual pivot point can be located between (a) a distal end of the first or second linkage arms, the distal end facing the tractor, and (b) a first tool on a row unit in a direction of travel of the row unit.

The closing wheel system can include a second closing wheel attached to the first closing wheel arm. The closing wheel system can include at least one closing wheel attached to a single closing wheel arm wherein a turning radius of the closing wheel caused by the castering effect is at least as long as a turning radius of a towing frame to which the closing wheel system is coupled. There can also be a second closing wheel attached to the single-wheel arm.

The closing wheel system can include an equalizer bar configured to control the vertical movement of a first closing wheel attached to a first closing wheel arm and a second closing wheel attached to a second closing wheel arm by applying an adjustable downward force equally to each of the first closing wheel arm and the second closing wheel arm, a rocker arm engaging a rocker pin that extends rearwardly towards the first and second closing wheels from a center portion of the rocker arm. The equalizer bar can be pivotally coupled at its center to the rocker pin and coupled at a first end to the first closing wheel arm, and at a second end to the second closing wheel arm. The rocker arm can be configured to move downwardly to cause the equalizer bar to rotate around the rocker arm and apply the controllable downward force equally to the first closing wheel arm and the second closing wheel arm.

A first linkage arm and a second linkage arm can cooperate to create a castering effect about a virtual pivot point that is a distance away from the first and second linkage arms, and the turning radius of the first and second closing wheels caused by the castering effect can be at least as long as a turning radius of a towing frame to which the closing wheel system is coupled. The first closing wheel arm, the second closing wheel arm, and the rocker arm can each be pivotally coupled to the retaining shaft and configured to pivot vertically about an axis of the retaining shaft.

The closing wheel system can have a mounting bracket configured to mount the closing wheel system to the towing frame and a rear pivot mount holding a retaining shaft.

The first and second linkage arms can be pivotally coupled to the mounting bracket by a respective front linkage pivot pin and pivotally coupled to the rear pivot mount by a respective rear linkage pivot pin. The distance of the virtual pivot point relative to the first and second linkage arms can be adjustable by adjusting a ratio of a distance between the respective front linkage pivot pins ("distance A") and a distance between the respective rear linkage pivot pins ("distance B"). The turning radius of the first and second closing wheels can be adjusted by adjusting either one of the lengths of the first or second closing wheel arms and the ratio of distance A to distance B. Distance A can be less than distance B. Distance A can be greater than distance B. Distance A can be equal to distance B. Overall, the ratio of distance A to distance B can be equal, greater than, or less than one another.

The rocker arm can be configured to move downwardly due to the downward force of a mechanical spring, a pneumatic device, a hydraulic cylinder assembly, an electrical cylinder, an electrical mechanical spring, a gas spring, a hydraulic actuator, a pneumatic actuator, a pneumatic cylinder, an electrical actuator, or a hydraulic cylinder assembly, to name a few examples.

The hydraulic cylinder assembly cam include a piston that exerts force onto a ball bearing configured to move the rocker arm downwardly.

The closing wheel can be in combination with a firming wheel assembly pivotally coupled to a retaining shaft between the first closing wheel arm and the second closing wheel arm and configured and positioned to press seed into an open furrow.

The closing wheel system can further include or can be in combination with a dispensing device supported by a mounting bracket, the dispensing device being configured and positioned to deposit the seed, fertilizer, or a combination of both into the open furrow.

Any of the foregoing can be in combination with the firming wheel assembly further comprising a torsion spring coiled around the rear pivot mount and configured to urge the firming wheel assembly downwardly while also resisting upward movement of the firming wheel assembly. The closing wheels of the closing wheel system can include one or more toothed closing wheels, smooth closing wheels, or a combination of both.

The closing wheel system can have a virtual pivot point located between the tractor and a distal end of the first or second linkage arms, the distal end facing the tractor.

The virtual pivot point can be located between (a) a distal end of the first or second linkage arms, the distal end facing the tractor, and (b) a first tool on a single row unit in a direction of travel of the single row unit.

A single row unit can be part of a row unit assembly comprising a towing frame and a plurality of row units. Each of the plurality of row units can include the closing wheel system and at least one soil-engaging tool.

The row unit assembly can constitute and/or be combined with other systems to constitute an agricultural system.

### BRIEF DESCRIPTION OF THE DRAWINGS

The following detailed description, given by way of example, but not intended to limit the invention solely to the specific embodiments described, may best be understood in conjunction with the accompanying drawings.
FIG. 1 is a front perspective view of a closing wheel system in accordance with the present disclosure;
FIG. 2 is a rear perspective view of the closing wheel system shown in FIG. 1;
FIG. 3 is a side view of the closing wheel system shown in FIG. 1;
FIG. 4 is front view of the closing wheel system shown in FIG. 1;
FIG. 5 is a rear view of the closing wheel system shown in FIG. 1;
FIG. 6 is a top plan view of the closing wheel system shown in FIG. 1;
FIG. 7 is a bottom plan view of the closing wheel system shown in FIG. 1;
FIG. 8 is an enlarged, exploded front perspective view of a portion of the closing wheel system shown in FIG. 1;
FIG. 9 is an enlarged, exploded rear perspective view of the portion shown in FIG. 8;
FIG. 10 is an enlarged, exploded rear perspective view of another portion of the closing wheel system in FIG. 1;
FIG. 11 is an enlarged, exploded rear perspective view of a different portion of the closing wheel system in FIG. 1;
FIG. 12 is a front perspective view of a closing wheel system that includes a firming wheel assembly, in accordance with the present disclosure;
FIG. 13 is a rear perspective view of the closing wheel system shown in FIG. 12; and
FIG. 14 is an enlarged, rear perspective view of a portion of the closing wheel system shown in FIG. 13.

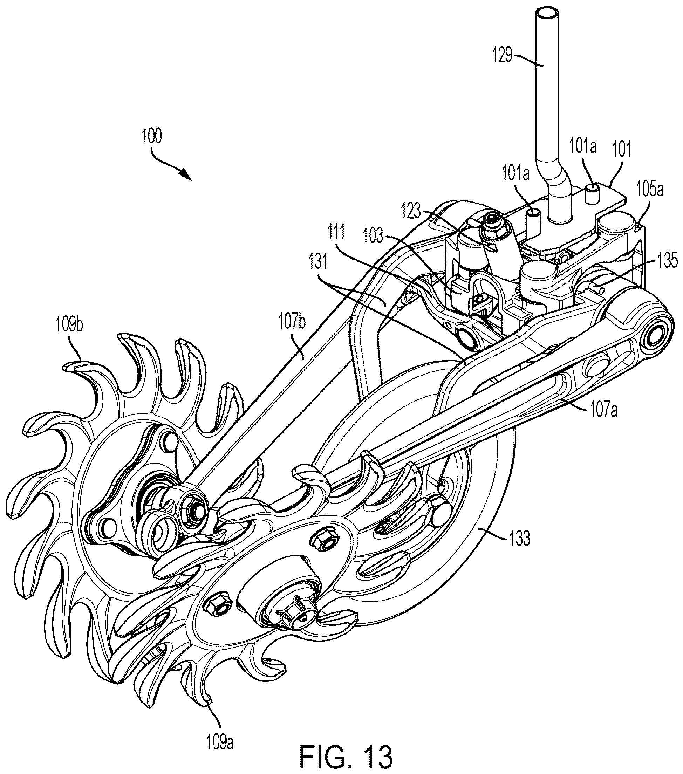

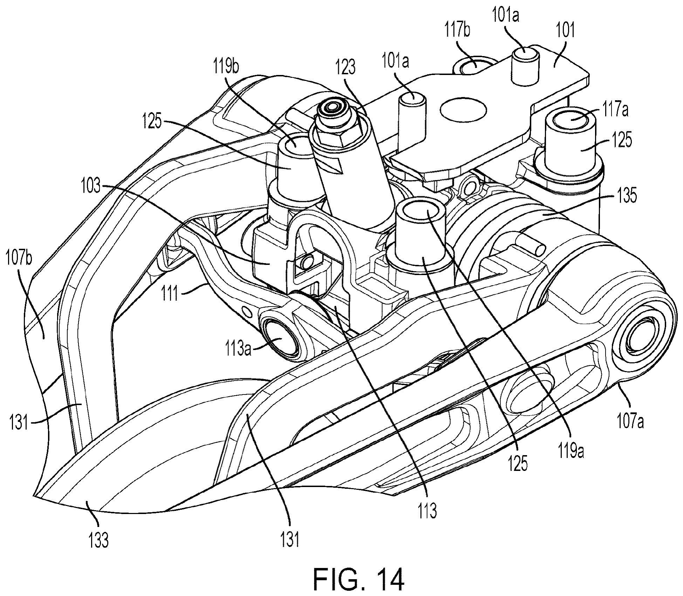

FIG. 14 is an enlarged, rear perspective view of a portion of the closing wheel system shown in FIG. 13.

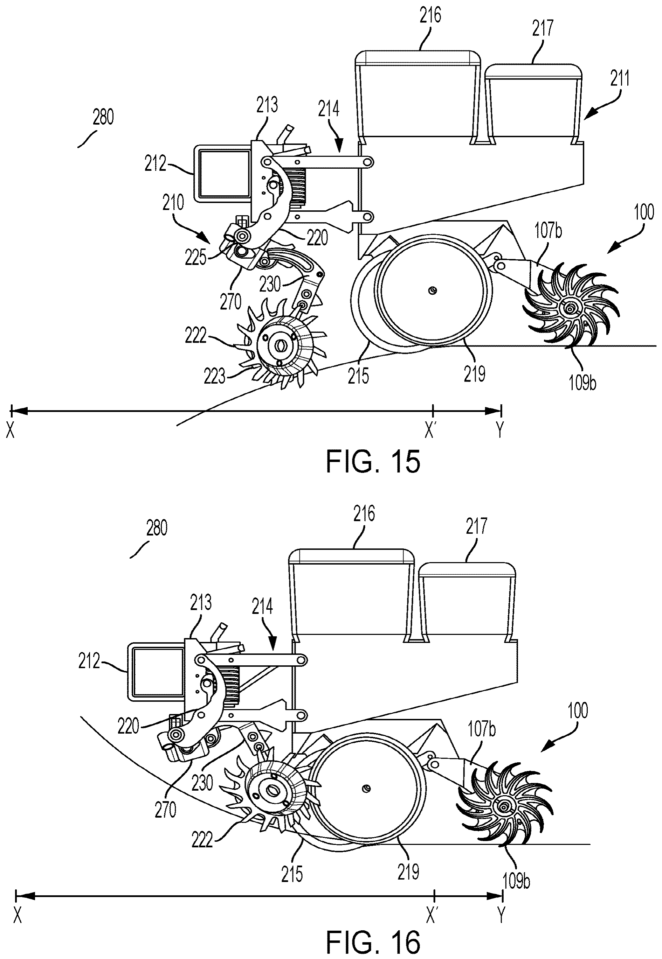

FIG. 15 is a side elevation of a planting row unit and a row-clearing unit, both attached to a towing frame, with the row-clearing unit in a lowered position.
FIG. 16 is the same side elevation shown in FIG. 15 with the row-clearing unit in a raised position.

To facilitate understanding, identical reference numerals were used, where possible, to designate identical elements that are common among multiple figures. It is contemplated that elements disclosed in one embodiment may be beneficially utilized in other embodiments without specific recitation thereto.

### DETAILED DESCRIPTION

Described herein is an improved furrow closing system (hereafter, referred to as a "closing wheel system") configured to remain in proper alignment with furrow opening equipment (and a resulting open furrow) as it is being pulled, including during complex maneuvers around curves (lateral displacement) and/or on slopes (vertical displacement). In addition, the closing wheel system described herein ensures that equal force is applied and maintained on the system's furrow closing wheels, including when traversing over irregular (e.g., bumpy, rough, wet, uneven, etc.) terrain. In this manner, the closing wheel system of the present disclosure improves furrow closing performance and facilitates automatic and responsive realignment when needed. As mentioned at the end of this disclosure, while the examples shown and described herein focus on equipment that would be used in an agricultural planting system, the concepts and embodiments disclosed herein are equally applicable to any other system where the benefits and advantages of the inventions disclosed herein can be realized.

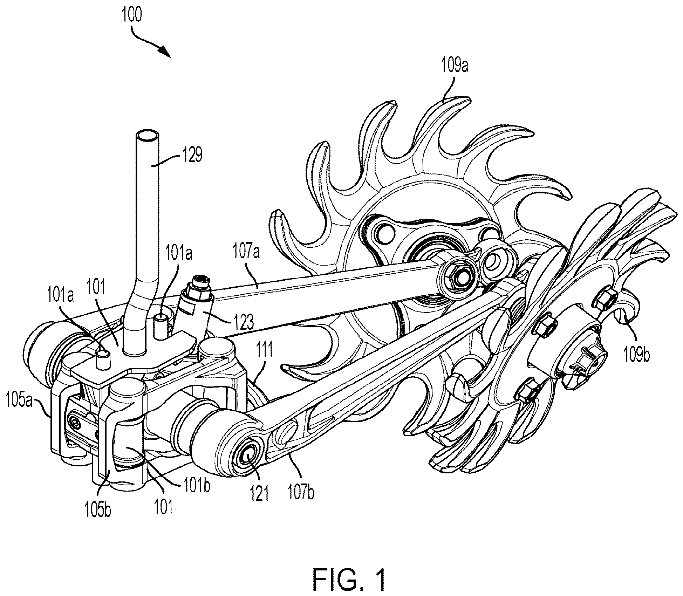

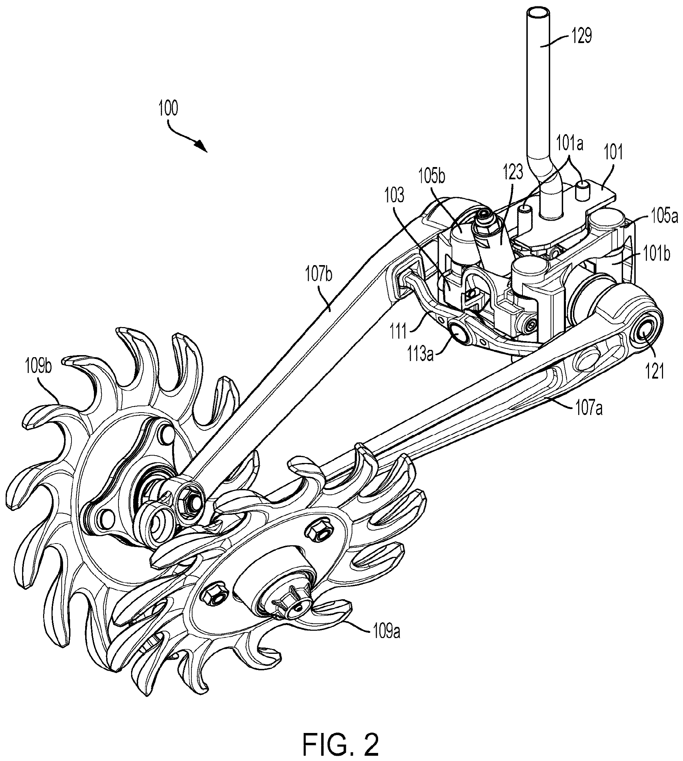

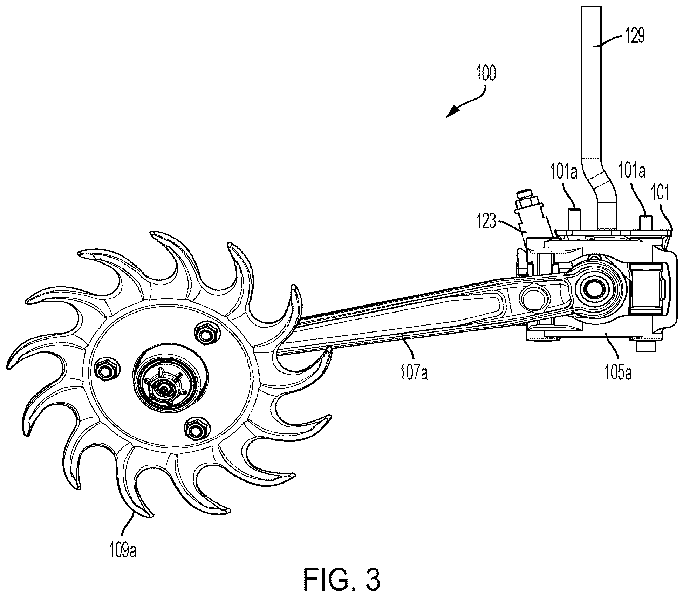

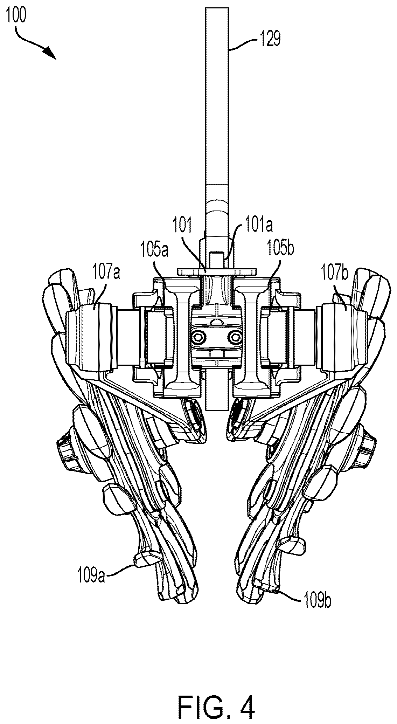

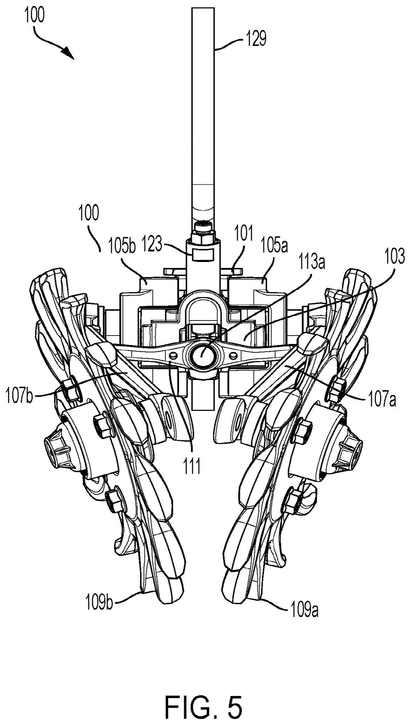

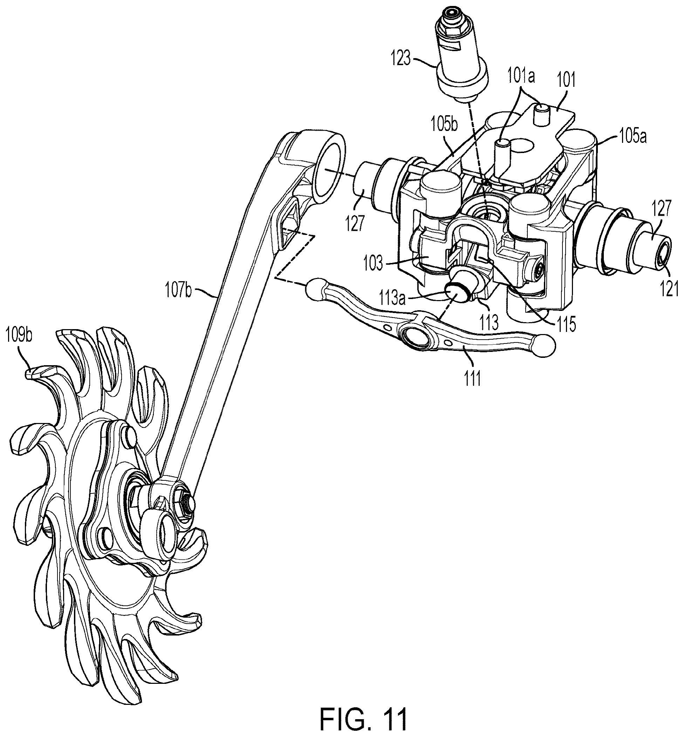

Turning now to FIG. 1, an exemplary closing wheel system 100 for closing an open furrow into which seed, fertilizer, a combination of both, or other products have been deposited is shown. FIG. 2 shows a rear perspective of the closing wheel system 100 shown in FIG. 1, and FIGs. 3-5 show a side view, front view and rear view, respectively, of the closing wheel system 100 shown in FIG. 1. The closing wheel system 100 may include (among other components) a mounting bracket 101, a rear pivot mount 103, two linkage arms 105a, 105b, a closing wheel arm 107a, attached to a respective closing wheel 109a, an equalizer bar 111, and a rocker arm 113 (*see* FIG. 11), each of which is discussed in further detail below. This closing wheel system 100 may also include (among other components) a second closing wheel 109b attached to the closing wheel arm 107a. In this example, the closing wheel system 100 includes (among other components) a mounting bracket 101, a rear pivot mount 103, two linkage arms 105a, 105b, two closing wheel arms 107a, 107b, each of which is attached to a respective closing wheel 109a, 109b, an equalizer bar 111, and a rocker arm 113 (*see* FIG. 11), each of which is discussed in further detail below.

The mounting bracket 101 shown in FIG. 1 is configured to securely mount the closing wheel system 100 to a towing frame (not shown) of a tractor (not shown) or other agricultural equipment that will pull or tow the closing wheel system 100 during a seeding or fertilizing application, for example. To that end, the mounting bracket 101 includes a pair of mounting bolts to which the towing frame may be connected. Although shown with only two mounting bolts, it will be understood that the mounting bracket 101 can include more or fewer mounting bolts, including in alternative locations, and/or other means for securely connecting to the towing frame, agricultural equipment, etc. according to this example.

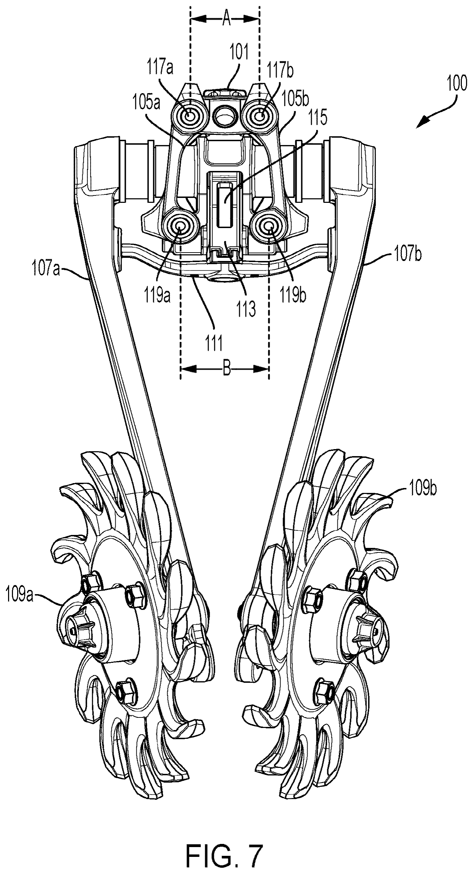

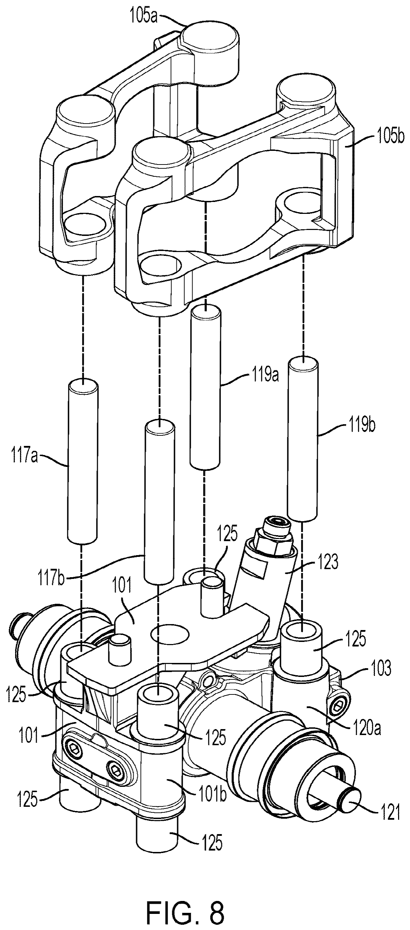

The mounting bracket 101 with a pair of front pin-receiving apertures or pin mounts 101b for use in securely holding the two linkage arms 105a, 105b, is configured to mount the closing wheel system 100 to the towing frame wherein each of the linkage arms 105a, 105b is pivotally coupled to the mounting bracket 101 by front linkage pivot pins 117a, 117b, and pivotally coupled to the rear pivot mount 103 holding a retaining shaft 121, by respective rear linkage pivot pins 119a, 119b. As can be seen in FIGs. 7 and 8, each linkage arm 105a, 105b is coupled to the mounting bracket 101 at one end via a respective front linkage pivot pin 117a, 117b. The front linkage pivot pins 117a, 117b are configured to allow for independent rotational or pivoting movement of each linkage arm 105a, 105b about its respective front linkage pivot pin 117a, 117b. In an embodiment, a pivot collar 125 can be placed over ends the front linkage pivot pins 117a, 117b to facilitate the pivoting movement of the linkage arms 105a, 105b.

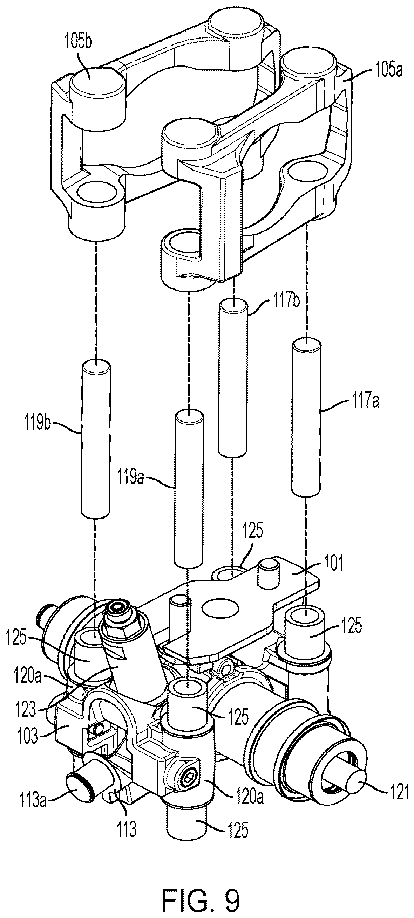

The linkage arms 105a, 105b are also shown coupled via respective rear linkage pivot pins 119a, 119b to a pair of rear pin-receiving apertures or pin mounts 120a formed in the rear pivot mount 103 (*see e.g.,* FIGs. 8-9). Similar to the front linkage pivot pins 117a, 117b discussed above, the rear linkage pivot pins 119a, 119b are also configured to allow for independent rotational or pivoting movement (e.g., lateral displacement relative to a ground surface) of each linkage arm 105a, 105b about its respective rear linkage pivot pin 119a, 119b. In an embodiment, a pivot collar 125 can similarly be placed over ends the rear linkage pivot pins 119a, 119b to facilitate the pivoting movement of the linkage arms 105a, 105b. As a result of this configuration, each linkage arm 105a, 105b can move and pivot about two separate pivot points, independently of one another. As discussed further below, the independent movement of the linkage arms 105a, 105b, along with their relative positioning, enable the closing wheel system 100 to remain aligned and/or to quickly self-correct under any operational conditions, such as when being pulled around curves, on slopes and/or over irregular terrain (e.g., vertical displacement relative to the lateral displacement).

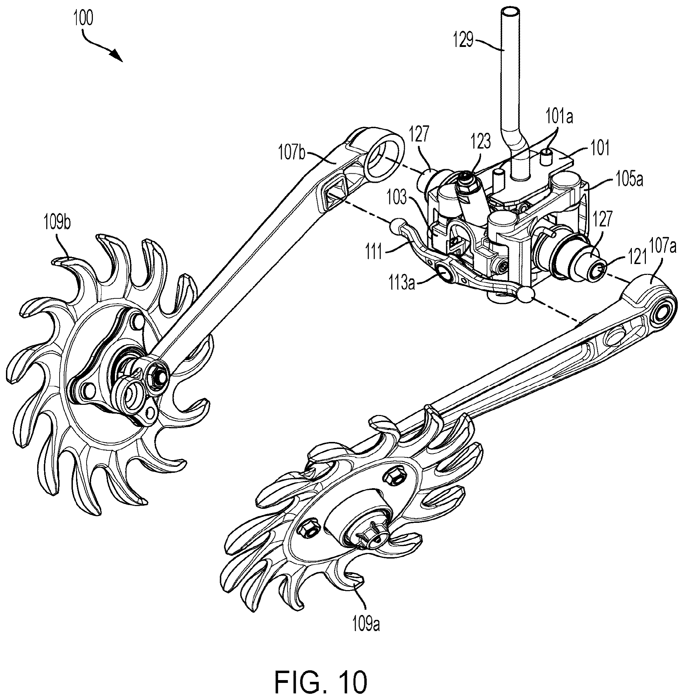

In an embodiment, the closing wheel system 100 can include one or more alternative structural components to which the linkage arms 105a, 105b and/or other components can be coupled for movement as described herein. The alternative structural components can be configured to include pin-receiving apertures, or otherwise configured for securely connecting and allowing for the linkage arms 105a, 105b to pivot independently about two respective pivot points. For example, the closing wheel system 100 can include a single structural bracket defining four pin-receiving apertures. In another example, the closing wheel system 100 can include four pin-receiving brackets securely mounted to one or more other components of the closing wheel system 100. Turning now FIGs. 10 and 11, the rear pivot mount 103 is shown configured to support a retaining shaft 121 to which each of the closing wheel arms 107a, 107b and the rocker arm 113 is coupled, in addition to securely holding the linkage arms 105a, 105b (via the respective rear linkage pivot pins 119a, 119b). As shown, each closing wheel arm 107a, 107b is coupled at one end to the retaining shaft 121, such that each closing wheel arm 107a, 107b is configured pivot vertically about an axis of the retaining shaft 121.

The rocker arm 113 is also shown coupled to a center portion of the retaining shaft 121 and is similarly configured to rotate or pivot vertically about the retaining shaft's vertical axis. The rocker arm 113 in this example engages a rocker pin 113a that extends rearwardly towards the closing wheels 109a, 109b from a center portion of the rocker arm 113. The rocker pin 113a is configured to support the equalizer bar 111 by coupling to the equalizer bar 111 at its center, as further discussed below.

In an embodiment, one or more retaining shaft collars 127 can be placed over ends or other portions of the retaining shaft 121 to facilitate the pivoting movement of the closing wheel arms 107a, 107b, the rocker arm 113 and/or other components that may be coupled thereto.

As noted above, the closing wheel system 100 can include one or more alternative structural components to which the rocker arm 113 and/or the closing wheel arms 107a, 107b can be coupled for movement as described herein. For example, rather than including a single retaining shaft 121 to which the closing wheel arms 107a, 107b and the rocker arm 113 are concentrically coupled, the closing wheel system 100 can include one or more other components to which the rocker arm 113 can be coupled and about which the rocker arm 113 can pivot. In such an embodiment, the rocker arm 113 and closing wheel pivot points are nonconcentric.

As shown in FIG. 10, the equalizer bar 111 is pivotally coupled at its center to rocker pin 113a, thereby enabling the equalizer bar 111 to pivot symmetrically about the rocker pin 113a. The equalizer bar 111 is also shown coupled at its ends to the first closing wheel arm 107a and to the second closing wheel arm 107b, respectively. As a result of this arrangement, each of the first and second closing wheel arms 107a, 107b can move independently of one another. This is to be contrasted, for example, with conventional closing wheel systems in which closing wheel arms are rigidly connected to each other, thereby causing the closing wheels 109a, 109b to move in unison. The equalizer bar 111 is also configured to control vertical movement of the first closing wheel arm 107a, the second closing wheel arm 107b and the respective closing wheels 109a, 109b attached thereto, by applying an adjustable downward force equally to each of the first closing wheel arm 107a and the second closing wheel arm 107b to maintain that adjustable downward force equally even when the closing wheels 109a, 109b are being pulled over irregular terrain and/or terrain having different elevations. For example, if the closing wheel system 100 becomes misaligned with the centerline of the open furrow, causing one closing wheel to be pulled over soil and the other to be pulled over or hover over the open furrow, the equalizer bar 111 is configured to apply and maintain an adjustable downward force equally on both of the closing wheels 109a, 109b. As a result, the closing wheel 109a or 109b that is being pulled over the open furrow will be forced downward, enabling it to contact soil of the open furrow, which in turn will allow the closing wheel system 100 to self-correct and realign with the centerline of the open furrow. This is to be contrasted with conventional closing wheel systems that lack such an equalizer bar 111 or any equivalent component. In such systems, since the closing wheels are configured to move in unison, a closing wheel that becomes misaligned and is being pulled over an open furrow will tend to remain misaligned and continue to be pulled over the open furrow. This is because there is no mechanism for urging that closing wheel downward until it engages with terrain and initiates a self-correction.

Also included in the closing wheel system 100 is a rocker arm 113 configured to move downwardly due to the downward force of a hydraulic cylinder assembly 123 to cause the equalizer bar 111 to apply the controllable downward force equally to the first closing wheel arm 107a and the second closing wheel arm 107b, and by extension, to the respective first and second closing wheels 109a, 109b. As shown in FIG. 1, and in further detail in FIG. 11, the rocker arm is configured to move downwardly due to the downward force of the hydraulic cylinder assembly 123 including a piston that exerts force onto a ball bearing 115 that, in turn, is configured to move the rocker arm 113 downwardly. However, the rocker arm can be configured to move downwardly due to the downward force of a mechanical spring, a pneumatic device, an electrical cylinder, an electrical mechanical spring, a gas spring, a hydraulic actuator, a pneumatic actuator, a pneumatic cylinder, or an electrical actuator.

In an embodiment, the closing wheel system 100 can further include a dispensing device 129 configured and positioned to deposit seed, fertilizer, a combination of both, and/or other products into an open furrow. For purposes of this disclosure, the term "deposit" refers to any combination of injecting, spreading, applying, or otherwise dispensing seed, fertilizer, etc. As shown in FIG. 1, the dispensing device 129 can be attached to and/or supported by the mounting bracket 101. It is understood, however, that the dispensing device 129 (or other types of dispensing devices) can be attached to other parts of the closing wheel system 100 and/or to other components of an agricultural system that includes the closing wheel system 100 (e.g., furrow opening equipment, towing equipment, etc.), so long as the dispensing device 129 is configured to deposit product along a centerline of the open furrow. In an embodiment, the dispensing device 129 can be configured to deposit seed, fertilizer, etc. onto an area that is between the closing wheels 109a, 109b and towing equipment that is pulling the closing wheel system 100 (e.g., an area forward of the closing wheels 109a, 109b) and/or onto an area that is on a side of the closing wheels 109a, 109b that is opposite that of the towing equipment (e.g., an area rearward of the closing wheels 109a, 109b).

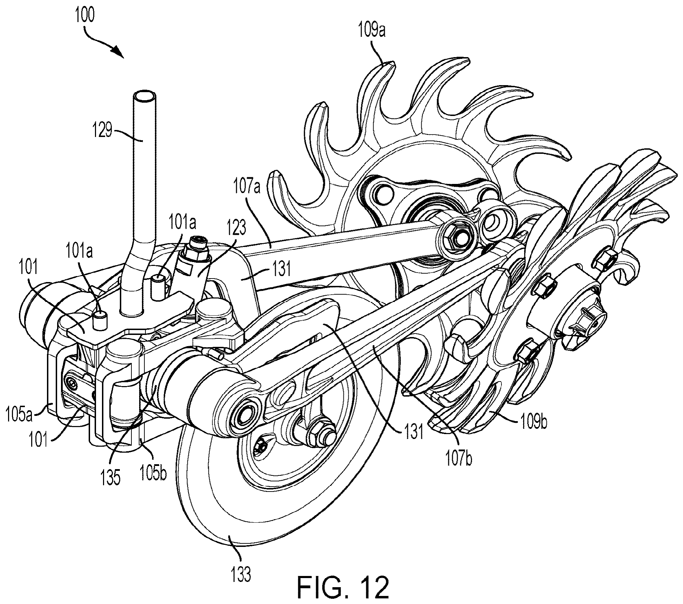

In an embodiment, the closing wheel system 100 can also include a firming wheel assembly configured and positioned to press the seed, fertilizer, a combination of both, and/or other products into the open furrow. As shown in FIGs. 12-14, the firming wheel assembly can be pivotally coupled to the retaining shaft 121 between the first closing arm and the second closing arm. The firming wheel assembly can also include a firming wheel 133 rotationally coupled to the firming wheel arms 131 that sits in alignment with the centerline of the open furrow. A torsion spring 135 coiled around the rear pivot mount 103 (or other structural component of the closing wheel system 100) and configured to urge the firming wheel assembly downwardly while also resisting upward movement of the firming wheel assembly as it is being pulled over terrain, for example.

In an embodiment, the closing wheel system 100 can be a part of an agricultural system configured to form an open furrow in the ground, deposit seed, fertilizer and/or other product into the open furrow, and then cover the seed, fertilizer and/or other product with soil. In an embodiment, the agricultural system can include a tractor or other soil-engaging equipment configured to pull the closing wheel system 100 along a centerline of the open furrow created by other components of the system. The closing wheel system 100 can be coupled to a towing frame of the tractor or other equipment via the closing wheel system's mounting bracket 101. This coupling can include fastening one or more mounting bolts of the mounting bracket 101 to the towing frame, as discussed above, or any other means for securing fastening the closing wheel system 100 to the tractor or other equipment. As the tractor or other equipment is pulling the closing wheel system 100, the closing wheels 109a, 109b of the assembly 100 can be angled and configured to cover the seed, fertilizer and/or other product with soil by cooperatively forcing the soil into the open furrow. In an embodiment, the closing wheels 109a, 109b can be toothed, as depicted in FIG. 1, while in another embodiment, the closing wheels can be smooth (not shown). In yet another embodiment, the closing wheels may include a combination of toothed and smooth wheels.

As the agricultural system maneuvers around curves and/or uneven irregular terrain, such as slopes or uneven soil surfaces, the closing wheel system 100 described herein is configured to remain aligned with the centerline of the open furrow. In instances where the closing wheel system 100 does become misaligned, features of the closing wheel system 100 enable it to quickly self-correct, thereby minimizing any such misalignment.

Indeed, as discussed above, the closing wheel system 100 includes a pair of linkage arms 105a, 105b that are each pivotally coupled to the closing wheel system 100 by respective front linkage pivot pins 117a, 117b and rear linkage pivot pins 119a, 119b. As a result, the linkage arms 105a, 105b are each configured to pivot independently about two different pivot points (i.e., a respective front linkage pivot point and a respective rear linkage pivot point). In addition, the linkage arms 105a, 105b are also in-effect anchored at one end to a moving closing wheel system 100 (e.g., via the rear pivot mount 103) and at their other end to a control point (e.g., the mounting bracket 101 that anchors the closing wheel system 100 to a towing frame of a tractor). As a result of this configuration, the linkage arms 105a, 105b cooperate to create a castering effect about a virtual pivot point that is a distance away from the linkage arms 105a, 105b, and wherein a turning radius of the closing wheels 109a, 109b caused by the castering effect is at least as long as a turning radius of a towing frame to which the closing wheel system 100 is coupled. That is, the linkage arms 105a, 105b transfer the turning motion (of the tractor or other pulling equipment) into a controlled, pivoting movement at a defined caster radius, where the caster radius refers to a distance between the virtual pivot point and the centerline of where the closing wheels 109a, 109b contact the soil.

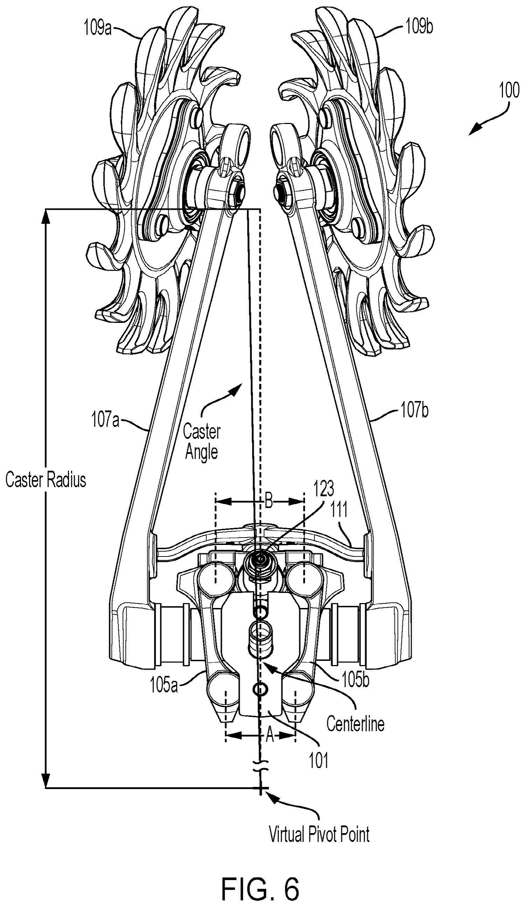

As shown in FIG. 6, the virtual pivot point is located between the tractor and a distal end of the linkage arms 105a, 105b, the distal end facing the tractor, a distance away from the linkage arms 105a, 105b, rather than at a point where the pulling force is applied (i.e., at the point of connection between the mounting bracket 101 and the towing frame). As a result, the closing wheel system 100 turns at a larger turning radius, namely, a turning radius that may be as large as that of the towing frame (of the tractor or any general vehicle or device used for hauling equipment) that is pulling the closing wheel system 100. As the closing wheel system 100 progresses through its turn about the virtual pivot point, the caster radius adjusts accordingly, thereby ensuring that the closing wheels 109a, 109b remain in alignment with the tractor (or other equipment), and by extension, in alignment with the centerline of the open furrow. The virtual pivot point is also located between (a) a distal end of the linkage arms 105a, 105b, the distal end facing the tractor, and (b) a first tool on a row unit in a direction of travel of the row unit.

The distance of the virtual pivot point relative to the first and second linkage arms 105a, 105b is adjustable by adjusting a ratio of a distance between the respective front linkage pivot pins 117a, 117b ("distance A") and a distance between the respective rear linkage pivot pins 119a, 119b ("distance B"). (*see e.g.,* FIGs. 6-7). Indeed, the smaller the ratio of distance A to distance B, the smaller the caster radius, and thus, the smaller the turning radius of the closing wheel system 100.

Conversely, the larger the ratio of distance A to distance B, the larger the caster radius, and thus, the larger the turning radius of the closing wheel system 100. In an embodiment, distance A can be smaller than distance B, equal to distance B or greater than distance B.

The size of the caster radius can be controlled and adjusted by adjusting the ratio of distance A to distance B, as indicated above. As a result, the location of the virtual point (e.g., its distance away from the linkage arms 105a, 105b) and the turning radius of the closing wheel system 100 can similarly be controlled and adjusted with adjustments to the ratio of distance A to distance B. Alternatively, or in addition, the caster radius, the location of the virtual point, and thus, the turning radius of the closing wheel system 100, can also be adjusted by adjusting (e.g., lengthening or shortening) the closing wheel arms 107a, 107b. Indeed, changes to a length of the closing wheels 109a, 109b can result in a change to the point where the closing wheels 109a, 109b contact the soil, thereby changing the caster radius, the virtual pivot point and the turning radius of the closing wheel system 100. As a result, the virtual pivot point's distance starts at the distal end of the linkage arms 105a, 105b, and may extend to the towing frame, the tow hitch, the tractor, the device pulling the closing wheel assembly, the row unit assembly elements, the soil engaging tools, or the total distance of the remaining agricultural system which may include any general vehicle or device used for hauling equipment.

Notably, conventional closing wheel systems lack the linkage arms described herein or anything equivalent thereto. As a result, conventional closing wheel systems are unable to define a distant virtual pivot point about which such closing wheels systems can turn. Instead, conventional closing wheel systems are limited to a turning radius that is generally defined by a point at which pulling force is applied to such systems (i.e., at the point of connection between the closing wheel system and the equipment that is pulling the same), which is often smaller than that of pulling equipment. As a result, the conventional closing wheels systems inevitably become misaligned, causing suboptimal furrow closure performance, inefficient equipment operation, soil compaction, and so on, as discussed above.

Conventional closing systems also lack any mechanism for be quickly self-correcting when such closing wheel systems become misaligned (with an open furrow) for any reason. The present disclosure, on the other hand, provides such a mechanism. Indeed, as discussed above, the closing wheel system 100 described herein includes an equalizer bar 111 that is configured to control vertical movement of the first and second closing wheels by applying an adjustable downward force equally to both of the closing wheel arms 107a, 107b of the closing wheel system 100. As a result of this constant downward force, each closing wheel 109a, 109b can independently maintain contact with the terrain on which it is being pulled. Thus, even if the two closing wheels 109a, 109b are pulled over different terrain topographies, including when one closing wheel is pulled over an open furrow as a result of a misalignment, the equalizer bar 111 would force both closing wheels 109a, 109b downward to maintain or reestablish contact with the terrain. In a case where a closing wheel is pulled over an open furrow, the downward force would cause that closing wheel to contact soil of the open furrow. The angle and rotation of the closing wheels 109a, 109b, when both are in contact with terrain, enable the closing wheel system 100 to self-correct and realign itself with the centerline of the open furrow.

Although the furrow closing assembly of the present disclosure has been described in connection with certain illustrative embodiments and figures, it is to be understood that the furrow closing assembly of the present disclosure is not limited to the precise construction and compositions described herein. On the contrary, the furrow closing assembly may embody any and all alternatives, modifications, and equivalent arrangements as may be included within the spirit and scope of this disclosure.

Turning to FIGs. 15 and 16, the illustrative implement includes a row-clearing unit 210 mounted in front of a planting row unit 211, and a closing wheel system 100 according to the present disclosure. Although only one planting row unit 211 is shown, it is to be understood that other implementations may include a plurality of planting row units, each connected side-by-side to a tow frame and each including a respective closing wheel system 100. In such implementations, the plurality of planting row units can be configured to operate in unison to plant multiple rows of crops simultaneously (e.g., one row per planting row unit), thereby increasing efficiency and productivity.

A common elongated hollow towing frame 212 (typically hitched to a tractor 280 by a draw bar) is rigidly attached to the front frame 213 of a four-bar linkage assembly 214 that is part of the planting row unit 211. The four-bar (sometimes referred to as "parallel-bar") linkage assembly 214 is a conventional and well-known linkage used in agricultural equipment to permit the raising and lowering of tools attached thereto.

As the planting row unit 211 is advanced by the tractor 280, a coulter wheel 215 works the soil and then other portions of the row unit part the cleared soil to form an open furrow, deposit seed in the open furrow and fertilizer adjacent to the open furrow and close the open furrow by distributing loosened soil into the open furrow with a closing wheel system 100. A gauge wheel 219 determines the planting depth for the seed and the height of introduction of fertilizer, etc. Bins 216 and 217 on the row unit carry the chemicals and seed which are directed into the soil. The planting row unit 211 is urged downwardly against the soil by its own weight. If it is desired to have the ability to increase this downward force, or to be able to adjust the force, a hydraulic or pneumatic cylinder and/or one or more springs may be added between the front frame 213 and the linkage 214 to urge the planting row unit 211 downwardly with a controllable force. Such a hydraulic cylinder may also be used to lift the row unit off the ground for transport by a heavier, stronger, fixed-height frame that is also used to transport large quantities of fertilizer for application via multiple residue-clearing and tillage row units. This hydraulic or pneumatic cylinder may be controlled to adjust the downward force for different soil conditions such as is described in U.S. Pat. Nos. 5,709,271, 5,685,245 and 5,479,992.

The row-clearing unit 210 includes an attachment frame that includes a pair of rigid frame arms adapted to be rigidly connected to the towing frame 212. The towing frame 212 may be connected to a tractor 280 represented by a black box in FIGs. 15 and 16. The tractor 280 can also be replaced by any general vehicle or device used for hauling equipment. One rigid frame arm 220 is shown in FIGs. 15 and 16 and has a corresponding counterpart on an opposite side of the planting row unit 211 that is not visible. This counterpart rigid frame arm is identical in structure and position, and symmetrically mirrors the visible rigid frame arm 220. In the illustrative embodiment, the visible rigid frame arm 220 and its counterpart (not shown) are bolted to opposite sides of the front frame 213 of the row unit 211, which in turn is rigidly attached to the towing frame 212. The visible rigid frame arm 220 and its counterpart (not shown) are also interconnected by an arched crossbar (not shown) that includes a pair of journals, one of which is visible in FIGs. 15 and 16. The visible journal 225 has a corresponding counterpart on an opposite side of the planting row unit 211 that is identical in structure and position, and symmetrically mirrors the visible journal 225.

The virtual pivot point can be located anywhere between points X and Y shown in FIGs. 15-16, where point Y denotes a distal end of the first and second linkage arms (not shown) of the closing wheel system 100 facing the towing frame 212, and point X represents an end of the tractor 280. As a result, the virtual pivot point may be located between point Y and any of the tools of the planting row unit 211, including the gauge wheel 219, the coulter wheel 215, the clearing wheels 223, 223, etc. For example, the virtual pivot point may be located at point X', which denotes a location or position of a first tool of the planting row unit 211, namely, the gauge wheel 219. Generally, a virtual pivot point is an imaginary point about which a structure follows a radial or curved path and is located a distance away from a pivoting device that would normally otherwise constrain the travel path of the structure.

An alternative is to attach the row-clearing unit 210 directly to the towing frame 212. At the bottom of the row-clearing unit 210, a pair of cooperating toothed clearing wheels 222 and 223 are positioned upstream of the coulter wheel 215 of the planting row unit 211.

The clearing wheels 222, 223 are arranged for rotation about transverse axes and are driven by the underlying soil as the wheels are advanced over the soil. The illustrative wheels 222, 223 are a type currently sold by the assignee of the present invention under the trademark TRASHWHEEL. The toothed wheels 222, 223 cooperate to produce a scissors action that breaks up compacted soil and simultaneously clears residue out of the path of planting. The wheels 221 and 222 kick residue off to opposite sides, thus clearing a row for planting. To this end, the lower edges are tilted outwardly to assist in clearing the row to be planted. This arrangement is particularly well suited for strip tilling, where the strip cleared for planting is typically only about 10 inches of the 30-inch center-to-center spacing between planting rows.

In FIGS. 15 and 16, the clearing wheels 222 and 223 are shown in two different vertical positions. Specifically, the wheels 222, 223 are in a lower position in FIG. 15, where the elevation of the soil is decreasing, than in FIG. 16, where the soil elevation is increasing.

In the illustrative embodiment, the planting row unit 211 includes a hydraulic cylinder 270. The hydraulic cylinder 270 can be configured to control downward pressure applied to one or more support arms 230 that in turn urge the clearing wheels 222, 223 against the soil.

While the present disclosure has focused on planting equipment as an exemplary embodiment, the present disclosure can be applied to any apparatus where it is important to maintain alignment among two sets of wheels along a travel path, such as a robot system or an autonomous vehicle, for example, or an apparatus that tows or drags a load having wheels, such as a trailer or a train, where it is important to have multiple sets of wheels follow the same radial or curved path simultaneously.

## Claims

1. A closing wheel system (100) comprising:
a first linkage arm (105a) and a second linkage arm (105b); and
a first closing wheel (109a) attached to a first closing wheel arm (107a); and
wherein the first linkage arm (105a) and the second linkage arm (105b) cooperate to create a castering effect about a virtual pivot point that is a distance away from the first and second linkage arms (105a, 105b), and
wherein a turning radius of the closing wheel (109a) caused by the castering effect is at least as long as a turning radius of a towing frame to which the closing wheel system (100) is coupled.

2. The closing wheel system (100) of claim 1, further comprising:
a second closing wheel (109b) attached to a second closing wheel arm (107b); and
an equalizer bar (111) configured to control vertical movement of the first and second closing wheels (109a, 109b) by applying an adjustable downward force equally to each of the first closing wheel arm (107a) and the second closing wheel arm (107b).

3. The closing wheel system (100) of claim 2, further comprising:
a rocker arm (113) engaging a rocker pin (113a) that extends rearwardly towards the first and second closing wheels (109a, 109b) from a center portion of the rocker arm (113),
wherein the equalizer bar (111) is pivotally coupled at its center to the rocker pin (113a) and coupled at a first end to the first closing wheel arm (107a), and at a second end to the second closing wheel arm (107b); and
wherein the rocker arm (113) is configured to move downwardly to cause the equalizer bar (111) to rotate around the rocker arm (113) and apply the controllable downward force equally to each of the first closing wheel arm (107a) and the second closing wheel arm (107b).

4. The closing wheel system (100) of one of the claims 1 to 3, further comprising:
a mounting bracket (101) configured to mount the closing wheel system (100) to the towing frame; and
a rear pivot mount (103) holding a retaining shaft (121),
wherein each of the first and second linkage arms (105a, 105b) is pivotally coupled to the mounting bracket (101) by a respective front linkage pivot pin (117a, 117b), and pivotally coupled to the rear pivot mount (103) by a respective rear linkage pivot pin (119a, 119b), and
wherein the distance of the virtual pivot point relative to the first and second linkage arms (105a, 105b) is adjustable by adjusting a ratio of a distance ("distance A") between the respective front linkage pivot pins (117a, 117b) and a distance ("distance B") between the respective rear linkage pivot pins (119a, 119b).

5. The closing wheel system (100) of claim 4, wherein the turning radius of the first and second closing wheels (109a, 109b) is adjusted by adjusting either one of a length of the first or second closing wheel arms (107a, 107b) and the ratio of distance A to distance B.

6. The closing wheel system (100) of claim 4 or 5, wherein distance A is less than distance B.

7. The closing wheel system (100) of one of the claims 4 to 6, wherein the first closing wheel arm (107a), the second closing wheel arm (107b), and the rocker arm (113) are each pivotally coupled to the retaining shaft (121) and configured to pivot vertically about an axis of the retaining shaft (121).

8. The closing wheel system (100) of one of the claims 3 to 7, wherein the rocker arm (113) is configured to move downwardly due to the downward force of a mechanical spring, a pneumatic device, an electrical cylinder, an electrical mechanical spring, a gas spring, a hydraulic actuator, a pneumatic actuator, a pneumatic cylinder, an electrical actuator, or a hydraulic cylinder assembly (123).

9. The closing wheel system (100) of claim 8, wherein the rocker arm (113) is configured to move downwardly due to the downward force of the hydraulic cylinder assembly (123), the hydraulic cylinder assembly (123) including a piston that exerts force onto a ball bearing (115) that, in turn, is configured to move the rocker arm (113) downwardly.

10. The closing wheel system (100) of one of the claims 4 to 9, in combination with a firming wheel assembly pivotally coupled to the retaining shaft (121) and positioned to press seed into an open furrow.

11. The closing wheel system (100) of claim 10, further comprising or in combination with a dispensing device (129) supported by the mounting bracket (101), the dispensing device (129) configured and positioned to deposit the seed, fertilizer, or a combination of both into the open furrow.

12. The closing wheel system (100) of claim 10 or 11, in combination with the firming wheel assembly further comprising a torsion spring (135) coiled around the rear pivot mount (103) and configured to urge the firming wheel assembly downwardly while also resisting upward movement of the firming wheel assembly.

13. The closing wheel system (100) of one of the claims 1 to 12, wherein the virtual pivot point is located between a tractor and a distal end of the first or second linkage arms (105a, 105b), the distal end facing the tractor.

14. The closing wheel system (100) of one of the claims 1 to 12, wherein the virtual pivot point is located between (a) a distal end of the first or second linkage arms (105a, 105b), the distal end facing a tractor, and (b) a first tool on a row unit in a direction of travel of the row unit.

15. The closing wheel system (100) of one of the claims 1 to 14, further comprising:
a second closing wheel attached to the first closing wheel arm (107a).
